# EUROPEAN PATENT SPECIFICATION

(11) **EP 2 701 460 B1**
(45) Date of publication and mention of the grant of the patent: **16.09.2015**
(21) Application number: 12773967.0
(22) Date of filing: 20.04.2012
(51) Int. Cl.: H05B 3/56, H05B 3/00, H05B 3/40, H05B 3/06

(54) **SPIRAL TUBE-LIKE HEATER**
SPIRALFÖRMIGER HEIZSCHLAUCH
ÉLÉMENT CHAUFFANT TUBULAIRE EN SPIRALE

(30) Priority: 20.04.2011 JP 2011093606
(43) Date of publication of application: 26.02.2014
(73) Proprietor: UBE Industries, Ltd., Yamaguchi 755-8633 (JP)
(72) Inventor: WATAKABE, Hideharu, Ube-shi, Yamaguchi 755-8633 (JP); AOKI, Fumio, Ichihara-shi, Chiba 290-0045 (JP)
(74) Representative: Grünecker Patent- und Rechtsanwälte PartG mbB
(86) International application number: PCT/JP2012/060675
(87) International publication number: WO 2012/144586

(56) References cited:
- WO-A1-94/12004
- WO-A2-2009/078622
- JP-A- 2001 015 254
- JP-A- 2003 151 725

## Description

### Technical Field

The present invention relates to a spiral tube-like heater which includes plural linear or tape-like heating elements disposed at a predetermined interval therebetween in the longitudinal direction. Specifically the present invention can be appropriately used for the purpose of heating a pipe or a hose, or keeping the pipe or the hose warm.

### Background Art

Hitherto, a spiral tube-like heater has been manufactured for the purpose of heating a pipe or a hose, or keeping the pipe or the hose warm. For example, Patent Literature 1 discloses a spiral tube-like heater with shape retention in which a conductive base material is integrally formed as an intermediate portion of a laminated body so as to give conductivity across both ends in the longitudinal direction of the laminated body including a tape-like heat-resistive resin film forming an inner layer of a spiral-like material, an adhesive layer forming an intermediate layer, and a tape-like heat-resistive resin film forming an outer layer.

Further, for example, Patent Literature 2 discloses a tape-like heater in which plural linear or tape-like heating elements are disposed in an insulated state in the longitudinal direction in the middle of a laminated body obtained by laminating two heat-resistive resin tapes using an adhesive.

Furthermore, the prior art in document WO 2009/078622 A2 discloses a surface heater using a strip type surface heating element and a fabricating method thereof, in which the surface heater can be embodied into a thin film form using a metallic surface heating element which has a specific resistance value appropriate as a heat wire and is formed of a strip style, where the strip type surface heating element can be sequentially produced at an inexpensive cost. The surface heater includes: the strip type surface heating element in which a number of strips which are obtained by slitting a metallic thin film are arranged with an interval in parallel with each other and both ends of each adjacent strip are connected with each other; and an insulation layer which is coated on the outer circumference of the strip type surface heating element in a plate form.

Moreover, the prior art in document WO 94/12004 discloses an electric heating pad including a flexible thin film heating element including two independent semiconductor circuits printed on an electrically insulating surfaces, laminated between overlying and underlying organic polyester sheets, the heating element being hermetically sealed in an outer organic polymer covering made of polyvinylchloride, polyethylene, or polyurethane. Thermostats are positioned directly over the printed circuits. A thermally conductive grease is applied between the thermostats and a polyester sheet to improve thermal conductivity. The independent circuits are connected in parallel by a multi-position switch, with each circuit being capable of being energized separately or in combination over the entire area of the pad.

### Citation List

### Patent Literature

Patent Literature 1: JP 11-74066 A
Patent Literature 2: JP 2001-15254 A

### Summary of Invention

### Technical Problem

However, in the spiral tube-like heaters disclosed in Patent Literatures 1 and 2, since the conductive base material as the heating element is connected to one lead wire, the temperature is controlled only in overall. Further, when the disconnection of the heating element occurs, the temperature may not be accurately controlled, and hence a problem in safety may occur.

The invention is made in view of the above-described problems, and it is a purpose of the invention to provide a spiral tube-like heater capable of accurately controlling a temperature over a wide range and reducing a problem in safety caused by the disconnection of a heating element.

### Solution to Problem

In order to achieve the above-described object, and find out that by the inventor with others have carefully examined a configuration in which two or more heating elements sandwiched between heat-resistive resin tapes are disposed in an insulated state and are respectively and independently joined to different lead wires from the outside, a temperature may be accurately controlled over a wide range and a problem in safety caused by the disconnection of the heating element may be reduced. Therefore, the invention is contrived. That is, the invention relates to a spiral tube-like heater in which a first heat-resistive resin tape and a second heat-resistive resin tape are laminated with an adhesive layer interposed therebetween while two or more heating elements extending in the longitudinal direction are interposed between the first heat-resistive resin tape and the second heat-resistive resin tape, the two or more heating elements being disposed while being insulated from each other and are respectively and independently joined to different lead wires from the outside.

In the invention, an adhesive sheet is disposed between the first heat-resistive resin tape and one joint portion of the joint portions of the two or more heating elements with respect to the lead wires and the adhesive sheet is disposed between the second heat-resistive resin tape and the other joint portions adjacent to the one joint portion, and then the first heat-resistive resin tape and the second heat-resistive resin tape are laminated through the adhesive layer. Then, the two or more heating elements are provided so that the relative position of the joint portion with respect to the lead wire in the longitudinal direction is different from that of at least the adjacent different heating element.

### Advantageous Effects of Invention

As described above, according to the invention, since plural heating elements are independently present, the temperature of the heating subject may be efficiently and accurately controlled. Further, even when the disconnection of one heating element occurs, the temperature may be controlled by the other heating element, and hence the heater may be more safely used. Thus, according to the invention, it is possible to provide a spiral tube-like heater capable of accurately controlling a temperature over a wide range and reducing a problem in safety caused by the disconnection of a heating element.

### Brief Description of Drawings

Fig. 1 is a perspective view illustrating an embodiment of a spiral tube-like heater according to the invention.
Fig. 2 is a cross-sectional view taken along the line A-A' of Fig. 1.
Fig. 3 is a partially cut-away schematic diagram illustrating a joint portion between a heating element and a lead wire.
Fig. 4 is a schematic diagram illustrating an example in which a first heat-resistive resin tape with an adhesive is wound on a round rod.
Fig. 5 is a schematic diagram illustrating an example in which a nichrome wire as a heating element is wound on the first heat-resistive resin tape.
Fig. 6 is a schematic diagram illustrating an example in which a second heat-resistive resin tape with an adhesive is wound on a round rod.
Fig. 7 is a schematic diagram illustrating an example in which a stainless wire is wound on a laminated body.
Fig. 8 is a schematic diagram illustrating an example in which the end of the heat-resistive resin tape is peeled off and a lead wire is attached to the heating element.
Fig. 9 is a schematic diagram illustrating an example in which a joint portion between the adjacent heating element and the lead wire is insulated and attached to each other.
Fig. 10 is a cross-sectional view taken along the line B-B' of Fig. 9, illustrating schematically an example of a process in which the end of the peeled heat-resistive resin tape adheres to a subject again.

### Description of Embodiments

Hereinafter, a spiral tube-like heater according to the invention will be described by referring to an embodiment. However, this embodiment is presented by way of example only, and is not intended to limit the scope of the invention. This novel embodiment may be embodied in a variety of other terms, and various omissions, substitutions and changes may be made.

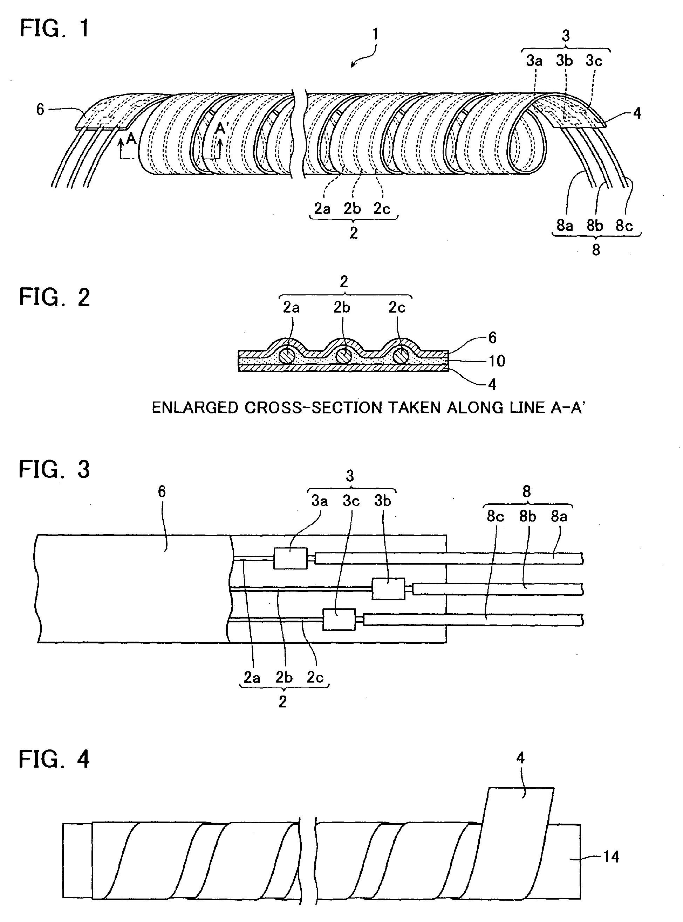

First, an embodiment of a spiral tube-like heater according to the invention will be described. As illustrated in Figs. 1 and 2, a spiral tube-like heater 1 according to the embodiment has a configuration in which heating elements 2 extending in the longitudinal direction are sandwiched between a first heat-resistive resin tape 4 and a second heat-resistive resin tape 6 provided in a laminated state, and the respective ends of the heating elements 2 in the longitudinal direction are independently joined to different lead wires 8.

As the heating elements 2, it is desirable to dispose two to five linear or planar heating elements in the longitudinal direction in an insulated state from one another, and in the embodiment, three linear heating elements are disposed. In three heating elements 2a, 2b, and 2c, the ends (the rear joint portions) 3a, 3b, and 3c thereof are respectively and independently joined to lead wires 8a, 8b, and 8c. Since the respective ends 3 of the heating elements 2 are independently joined to the lead wires 8, the temperature of a heating subject may be efficiently and accurately controlled. Further, even when one heating element is disconnected, the temperature control may be performed by the other heating element, and hence the heater may be more safely used. Further, in order to ensure the heating elements 2 to be reliably insulated from one another, as illustrated in Fig. 3, a configuration is desirable in which at least one joint portion of the joint portions between the heating elements 2 and the lead wires 8 and the other joint portions adjacent to the one joint portion (for example, 3a and 3b) are provided so as to have a different relative position in the longitudinal direction, that is, both joint portions are disposed deviated from each other so as not to be disposed on the same straight line in the short direction.

In the heating elements 2, a linear heating element including one or more (generally, one to ten) metal wires may be exemplified. As the metal wire, it is desirable that the diameter be 10 to 500 µm and particularly be 20 to 200 µm. Further, as a planar heating element, a metal foil or a band-like metal may be exemplified, and it is desirable that the thickness be about 5 to 100 µm and the width be about 0.4 to 40 mm.

As metal used to form the metal wire, the metal foil, and the band-like metal, metal having electrical resistance such as nichrome, cantal, inconel, and cast iron may be exemplified. In particular, metal having resistivity of 30 × 10⁻⁶ Ωcm or more is desirable. The plural linear or planar heating elements are disposed at a predetermined interval therebetween. The interval may be different depending on the width of the heater or the number of the linear or planar heating elements. It is desirable to set the interval to about 1 to 20 mm.

The first heat-resistive resin tape 4 and the second heat-resistive resin tape 6 respectively form the surface layer of the heater as the laminated body, is disposed with the heating elements 2 interposed therebetween, and is laminated through an adhesive layer 10 interposed therebetween. The first heat-resistive resin tape 4 and the second heat-resistive resin tape 6 are formed of polyimide or polyamide having a glass-transition temperature or a melting point of 180°C or more. Further, it is desirable that a tape-like film has a thickness of 15 to 200 µm and a width of 3 to 50 mm.

Among these, an aromatic polyimide film or an aromatic polyamide film is very desirable which has a linear expansion coefficient (CTE) of 3 to 50 × 10⁻⁶ cm/cm/°C (which may be expressed as ppm) and a tensile modulus of 200 to 1400 kg/mm² at 50 to 300°C. Particularly, it is desirable that an aromatic polyimide film has a water absorption rate of 4% or less and more desirably 3% or less.

The aromatic polyimide may be obtained by polymerizing and imidizing, for example, aromatic tetracarboxylic acid dianhydride such as 3, 3', 4, 4'-biphenyl tetracarboxylic dianhydride, pyromellitic dianhydride, and 3, 3', 4, 4'-benzophenone tetracarboxylic acid dianhydride and aromatic diamine such as p-phenylenediamine and 4, 4'-diaminodiphenyl ether. Particularly, aromatic polyimide which is obtained by using 15 mol% or more of 3, 3', 4, 4'-biphenyl tetracarboxylic dianhydride in the aromatic tetracarboxylic acid element is desirable from the viewpoint of the heat-resistance, the low linear expansion coefficient, and the low water absorption rate.

Further, the aromatic polyamide may be obtained by the reaction of, for example, aromatic chloride such as 2-chloroterephthalic chloride and 2, 5-dichloroterephthalic chloride and aromatic diamine such as 2-chloro-p-phenylenediamine and 4, 4'-diaminodiphenyl ether.

Hereinafter, a desirable method of manufacturing the aromatic polyimide film and the aromatic polyamide film used as the material of forming the first heat-resistive resin tape 4 and the second heat-resistive resin tape 6 will be described in more detail.

The aromatic polyimide film may be manufactured, for example, as below. First, aromatic tetracarboxylic acid dianhydride and aromatic diamine are polymerized in organic polar solvent such as N, N-dimethylacetamide or N-methyl-2-pyrolidone so as to obtain a polyamic acid (imidization rate: 5% or less) solution in which polymer logarithmic viscosity (measurement temperature: 30°C, concentration: 0.5g/100 ml solvent, solvent: N-methyl-2-pyrolidone) is 1 to 5, a polymer concentration is 15 to 25 % by weight, and rotational viscosity (30°C) is 500 to 4500 poise. Subsequently, a polyamic acid solution composition is prepared by adding 0.01 to 1 parts by weight of a phosphorus compound, for example, an organic phosphorus compound such as amine salt of (poly) phosphate ester and/or phosphate ester or an inorganic phosphorus compound with respect to 100 parts by weight of polyamic acid and 0.02 to 6 parts by weight of an inorganic filler (appropriately, an average particle diameter of 0.005 to 5 µm and particularly 0.005 to 2 µm) such as colloidal silica, silicon nitride, talc, oxidized titanium, and calcium phosphate with respect to 100 parts by weight of polyamic acid. The polyamic acid solution composition is directly casted to a support surface having a smooth surface or is casted to the support surface along with chemical imidization agent. Then, the polyamic acid solution composition is dried so as to form a fixed film, and the fixed film is peeled from the support surface. Subsequently, one or both surfaces of the fixed film may be applied with a surface treatment liquid containing aminosilane, epoxysilane, or titanate surface treatment agent, and the fixed film may be further dried. The fixed film which is obtained as described above is stretched in both directions if necessary, and is heated within the range of the maximum heating temperature of 350 to 500°C so as to be dried and imidized while both edges of the dry film in the short direction are clamped, thereby appropriately manufacturing the aromatic polyimide film. The aromatic polyimide film which is obtained as described above is appropriately heated in the temperature of about 200 to 400°C under the low tensile force or no tensile force so as to undergo a stress relaxation process, and is wound up. The aromatic polyimide film may be directly used as the aromatic polyimide film or may be used as the aromatic polyimide film with improved adhesiveness after surface treatment such as a corona discharge treatment, a plasma treatment, a UV irradiation treatment, a glow discharge treatment, and a flame treatment is performed thereon.

Further, the aromatic polyamide film may be manufactured, for example, as below. Aromatic chloride and aromatic diamine are synthesized by solution polymerization in organic polar solvent or interfacial polymerization using a water-based medium. Since a polymer solution produces hydrogen chloride as a by-product when using acid chloride and diamine as monomer, inorganic neutralizing agent such as calcium hydroxide or organic neutralizing agent such as ethylene oxide is added thereto so as to neutralize the solution. Further, the reaction between isocyanate and carboxylic acid occurs in aprotic organic polar solvent in the presence of catalyst. The polymer solution may be directly used as a membrane-forming solution of forming a film or the polymer may be isolated once so as to be re-dissolved in the solvent for the preparation of the membrane-forming solution. To the membrane-forming solution, inorganic salt, for example, calcium chloride, magnesium chloride, or the like as a dissolution auxiliary may be added. It is desirable that the polymer concentration in the membrane-forming solution is 2 to 35 % by weight.

It is desirable that the first heat-resistive resin tape 4 and the second heat-resistive resin tape 6 adhere to each other through the adhesive layer 10 interposed therebetween. The adhesive layer 10 is formed by a heat-resistant thermoplastic adhesive or a thermosetting adhesive, and the thickness of the laminated adhesive layer in a dry state is preferably 2 to 100 µm and the width thereof is preferably 3 to 50 mm preferably. The adhesive layer 10 may be provided by applying an adhesive to the first heat-resistive resin tape 4 and/or the second heat-resistive resin tape 6 or may be provided by molding an adhesive formed in a sheet shape in advance. Particularly, it is desirable to provide the adhesive layer by forming the first heat-resistive resin tape 4 and/or the second heat-resistive resin tape 6 as a tape-like film with adhesive.

As the thermosetting adhesive forming the adhesive layer 10, an epoxy resin, a NBR-phenol resin, a phenol-butyral resin, an epoxy-NBR resin, an epoxy-phenol resin, an epoxy-nylon resin, an epoxy-polyester resin, an epoxy-acrylic resin, an acrylic resin, a polyamide-epoxy-phenol resin, a polyimide resin, a polyimidesiloxane-epoxy resin, and the like may be exemplified. Further, as the thermoplastic adhesive, a polyimide resin, a polyimidesiloxane resin, a polyamide-imide resin, a polyamide-imide ester resin, a polyimide ester resin, and the like may be exemplified. Among these, the thermosetting adhesive formed of a polyimidesiloxane resin is desirable.

Hereinafter, a method of manufacturing the spiral tube-like heater 1 according to the embodiment will be described. It is desirable that the spiral tube-like heater 1 according to the embodiment be formed as an elongated member having the same outer shape as that of the heating subject (the shape of the heating subject may be formed in an arbitrary shape with a circular or rectangular cross-section). As the manufacturing method, the first heat-resistive resin tape 4 is first wound on a heat-resistant rod or a pipe 14 in a spiral shape so as to become an inner layer, the second heat-resistive resin tape 6 having a width equal to or slightly narrower than that of the first heat-resistive resin tape is wound thereon so as to become an outer layer, and the adhesive layer 10 and two to five linear or planar heating elements 2 are disposed in the longitudinal direction between both heat-resistive resin tapes. As the first heat-resistive resin tape 4 and the second heat-resistive resin tape 6, for example, tape-like aromatic polyimide films are appropriately used. Next, the inner and outer layers of the films are laminated in an overlapping state so as to be integrated with each other by curing the adhesive in a manner such that solvent is dried and removed and the adhesive is heated at the curing temperature or more in the stage B in a case where the adhesive used in the adhesive layer 10 is a thermosetting adhesive, or in a manner such that a pressure is applied to the laminated body and the adhesive is cooled after being heated at the glass-transition temperature or melting point or more in a case where the adhesive used in the adhesive layer 10 is a thermoplastic adhesive. The adhesive layer 10 forms an intermediate layer in the laminated body. Next, different lead wires 8 are respectively and independently joined to the respective heating elements 2 of the spiral laminated body that is obtained by the lamination and the integration, thereby obtaining the spiral tube-like heater 1.

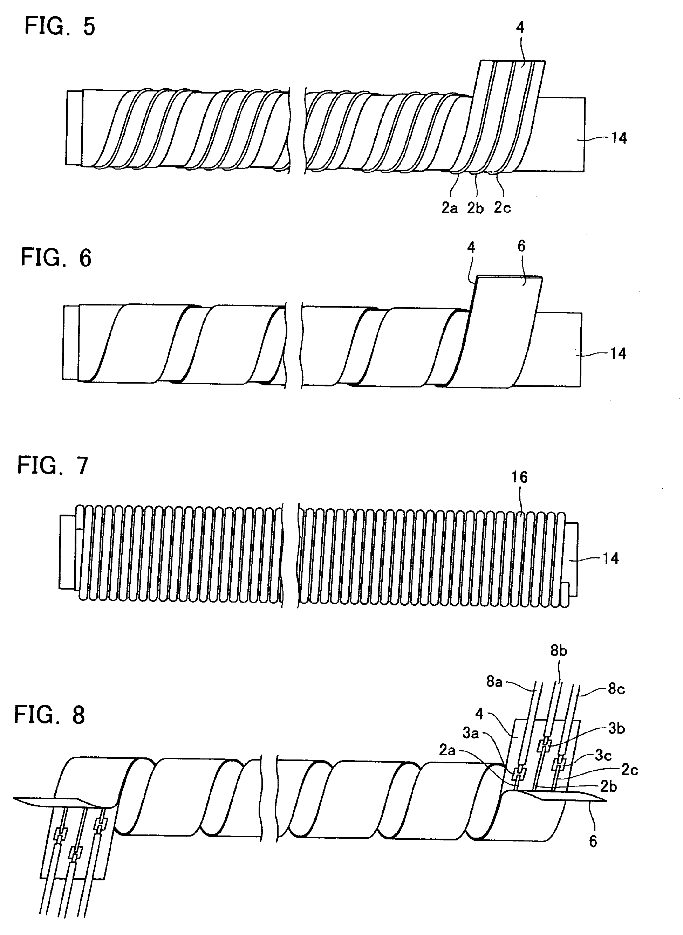

As illustrated in Figs. 4 to 7, the above-described method may be appropriately performed, for example, as below. First, the adhesive which becomes the adhesive layer 10 is applied to one surface of the heat-resistive resin film as the material forming the first heat-resistive resin tape 4 as the inner layer and the second heat-resistive resin tape 6 as the outer layer, so that a film with an adhesive is obtained in which the thickness of the dry adhesive is 2 to 100 µm. The film is cut into the width of 3 to 50 mm, so that the first heat-resistive resin tape 4 and the second heat-resistive resin tape 6 with the adhesive are manufactured. The first heat-resistive resin tape 4 is wound in a spiral shape on a circular rod or pipe 14 having a diameter of 5 to 50 mm so that the surface with the adhesive becomes the outer surface, and both ends of the tape are fixed (Fig. 4). Subsequently, two to five linear heating elements 2 are wound thereon in a spiral shape in the longitudinal direction (Fig. 5). Subsequently, the second heat-resistive resin tape 6 with the adhesive becoming the outer layer is wound thereon so as to overlap the adhesives (Fig. 6). If necessary, the periphery of the second heat-resistive resin tape is pressed and fixed by a tape-like or linear wire 16 and the like (Fig. 7). Then, the laminated body is heated in the temperature range of 150 to 400°C so as to cure the adhesive in a laminated and integrated state. Then, the formed laminated body is cooled and then separated from the rod or pipe 14, so that a spiral laminated body may be obtained.

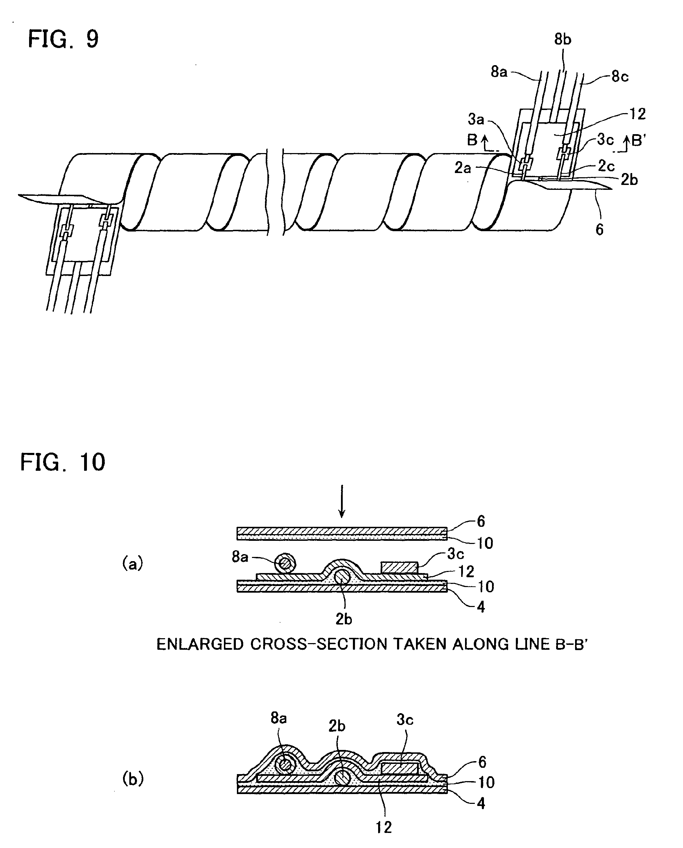

Subsequently, the spiral laminated body which is obtained as described above is cut into an appropriate length, and the ends of the plural heating elements 2 are respectively and independently connected to the different lead wires 8, so that the spiral tube-like heater 1 according to the embodiment may be obtained. As for the connection between the heating elements 2 and the lead wires 8, for example, in Fig. 8, three heating elements 2a, 2b, and 2c exposed by peeling both ends of the first heat-resistive resin tape 4 and the second heat-resistive resin tape 6 are respectively and independently joined to different lead wires 8a, 8b, and 8c. The heating elements 2 and the lead wires 8 are connected to one another by an arbitrary method that ensures the conductivity. As the connection method, for example, soldering, brazing, welding, die punching, and the like may be exemplified. At this time, as described above, it is desirable to provide the joint portions (for example, 3a and 3b) between the heating elements 2 and the lead wires 8 so that the joint portions have a different relative position in the longitudinal direction, that is, the joint portions are deviated from each other so as not to be disposed on the same straight line in order to ensure the reliably insulation. Further, as illustrated in Fig. 9, in order to further ensure the insulation of the joint portions 3a, 3b, and 3c between the heating elements 2 and the lead wires 8, it is desirable that one adhesive sheet 12 is disposed between one of the joint portions 3a and 3c and the first heat-resistive resin tape 4 and between the other joint portion 3b and the second heat-resistive resin tape 6. That is, it is desirable to dispose the joint portions so that the joint portions are deviated from each other at vertically through the adhesive sheet 12 interposed therebetween. The adhesive sheet 12 is desirably an adhesive configured by a heat-resistant thermoplastic adhesive or by a thermosetting adhesive, that has been molded a sheet-like shape. That is, the adhesive used in the adhesive sheet 12 is desirably similar to the adhesive layer 10. Further, as illustrated in Fig. 10, the spiral tube-like heater 1 according to the embodiment may be obtained in a manner such that an adhesive sheet forming the adhesive layer 10 is disposed again throughout the portion obtained by peeling off the heat-resistive resin tape, the peeled heat-resistive resin tape is returned to the original state, and is heated and pressurized so as to cover the entire joint portion by the heat-resistive resin tape, and hence the adhesive sheet 12 formed of the same material as that of the adhesive layer 10 is integrated with the adhesive layer 10.

While the method of manufacturing the spiral tube-like heater 1 according to the embodiment has been described, the manufacturing method is an example. For example, the spiral tube-like heater 1 according to the embodiment may be manufactured by preparing in advance the laminated body obtained by laminating the first heat-resistive resin tape 4, the adhesive layer 10, the heating element 2, and the second heat-resistive resin tape 6, and by molding the laminated body in a spiral shape.

In order to ensure the spiral tube-like heater according to the embodiment to further uniformly conduct the heat to the heating subject, a material having high thermal conductivity (for example, a copper wire) may be braided to the outer side thereof. Further, for the purpose of keeping the warm temperature, the outer side may be covered by a thermal insulator such as a heat-resistive porous sheet or a heat-resistive expanded sheet formed by a foam of a silicone resin, a glass fiber, a foam of a fluorine-contained resin, or the like.

### Examples

Hereinafter, Example of the invention will be described. The respective measurements of Example are performed as below.

### (1) Resistance Measurement

This measurement was performed in accordance with MIL-STD-202G Method 303.
Environment Temperature: 20°C ± 5°C

### (2) Insulation Resistance Measurement

This measurement was performed in accordance with MIL-STD-202G Method 302.
Application Voltage: 1000 V (DC)
Application Time: one minute

### (3) Withstanding Voltage Measurement

This measurement was performed in accordance with MIL-STD-202G Method 302.
Application Voltage: 1000 V (AC 50 Hz)
Application Time: one minute

### (4) Current applying test

The heater was drooped in a free state without being fixed to a jig under the environment of 25°C ± 5°C, and a specific direct voltage was applied thereto for 168 hours.

### (5) Thermal Shock Test

The heater was subjected to the heat cycle of -65°C for 30 minutes, a room temperature for 5 minutes, and 150°C for 30 minutes five times in an air tank type thermal shock test machine (WINTECH NT1200W manufactured by Kusumoto Chemicals, Ltd.).

### Example 1

### (Manufacturing of Spiral Laminated Body)

A film obtained by laminating a polyimidesiloxane thermosetting adhesive on one surface of an aromatic polyimide film (manufactured by UBE INDUSTRIES, LTD.) was cut into the width of 7 mm, and an adhesive tape A (the first heat-resistive resin tape) and a tape B (the second heat-resistive resin tape) having a length of 367 mm were manufactured. The adhesive tape A was wound in a spiral shape on a stainless round bar having an outer diameter of 6.35 mm and a length of 1 m at the pitch of 20 mm so that the surface with the adhesive became the outer surface, and both ends thereof were fixed. Next, three nichrome wires (heating elements a, b, and c) having an outer diameter of 0. 14 mm were wound thereon so as to have the uniform width with respect to the tape width, and both ends thereof were fixed. Further, the adhesive tape B was wound thereon so that the surface with the adhesive became the inner surface, and both ends thereof were fixed. Then, the stainless wire was wound on the entire laminated body without any gap, was heated in the oven at 100°C for one hour, and then was heated at 200°C for one hour so as to cure the adhesive. Then, the stainless wire was cooled, so that the spiral laminated body having a length of 260 mm was manufactured.

### (Attachment of Lead Wire)

The spiral laminated body manufactured as described above was separated from the stainless round bar, and the portions of about 20 mm from both ends of the laminated body were peeled off from the overlapping portion between the adhesive tape A and the adhesive tape B so as to expose the nichrome wires. Then, the respective nichrome wires were wound on the ends of the electrical cables (M2750024TN3U00 manufactured by Junkosha Inc.) of which the coatings were peeled off, the joint portions between the respective nichrome wires and the electrical cables were wrapped by a nickel foil having a thickness of 100 µm, a width of 2 mm and a length of 2 mm, and then the center portions of the nickel foils were spot-welded. At this time, the joint positions were adjusted so that the joint portions between the wires and the respective nichrome wires were not disposed on the same straight line in the short direction of the laminated body.

### (Insulating and Coating of Joint Portion)

A polyimidesiloxane thermosetting adhesive sheet having a width of 7 mm and a length of about 10 mm was disposed in the joint portions between the nichrome wires and the electrical cables so that both-end joint portions were positioned at the lower side and the center joint portion was positioned at the upper side, a polyimidesiloxane thermosetting adhesive sheet having a width of 7 mm and a length of about 20 mm was disposed so as to cover the entire joint portions, and then all layers overlapped one another and were pressed by a press machine at 200°C for 5 minutes so that all layers adhered to one another, thereby obtaining the spiral tube-like heater. The initial characteristics of the heater and the characteristics after the energization test and the thermal shock test are illustrated in Tables 2 and 3.

### Examples 2 to 4

The heater having the specification illustrated in Table 1 was prepared by the same method as that of Example 1.

**[Table 1]**

| Example | Tape width (mm) | Tape length (mm) | Length (mm) | Pitch (mm) | Tube diameter (mm) | Nichrome wire outer diameter (mm) |
|---|---|---|---|---|---|---|
| 1 | 7 | 367 | 260 | 20 | 6.35 | 0.14 |
| 2 | 6 | 66 | 47 | 17 | 5.35 | 0.06 |
| 3 | 7 | 676 | 476 | 20 | 6.35 | 0.08 |
| 4 | 7 | 1398 | 990 | 20 | 6.35 | 0.11 |

**[Table 2]**

| Example | | Resistance value (Ω) | Insulation resistance (MΩ) | Withstanding voltage (mA) |
|---|---|---|---|---|
| | Heater a | 24.5 | 1000 or more | 1 or less |
| 1 | Heater b | 23.2 | 1000 or more | 1 or less |
| | Heater c | 23.4 | 1000 or more | 1 or less |
| | Heater a | 26.3 | 1000 or more | 1 or less |
| 2 | Heater b | 26.2 | 1000 or more | 1 or less |
| | Heater c | 26.8 | 1000 or more | 1 or less |
| | Heater a | 145.3 | 1000 or more | 1 or less |
| 3 | Heater b | 142.1 | 1000 or more | 1 or less |
| | Heater c | 142.3 | 1000 or more | 1 or less |
| | Heater a | 145.3 | 1000 or more | 1 or less |
| 4 | Heater b | 142.1 | 1000 or more | 1 or less |
| | Heater c | 142.3 | 1000 or more | 1 or less |

**[Table 3]**

| Example | | Test voltage | Characteristics after energization test and thermal shock test | | |
|---|---|---|---|---|---|
| | | | Resistance value (Ω) | Insulation resistance (MΩ) | Withstanding voltage (mA) |
| | Heater a | 4.3 | 24.1 | 1000 or more | 1 or less |
| 1 | Heater b | 4.3 | 23.0 | 1000 or more | 1 or less |
| | Heater c | 4.3 | 23.1 | 1000 or more | 1 or less |
| | Heater a | 11.5 | 26.3 | 1000 or more | 1 or less |
| 2 | Heater b | 11.5 | 26.2 | 1000 or more | 1 or less |
| | Heater c | 11.5 | 26.6 | 1000 or more | 1 or less |
| | Heater a | 37.0 | 145.5 | 1000 or more | 1 or less |
| 3 | Heater b | 37.0 | 142.3 | 1000 or more | 1 or less |
| | Heater c | 37.0 | 142.6 | 1000 or more | 1 or less |

### Reference Signs List

- 1: spiral tube-like heater
- 2: heating element
- 4: first heat-resistive resin tape
- 6: second heat-resistive resin tape
- 8: lead wire
- 10: adhesive layer

## Claims

1. A spiral tube-like heater (1) in which a first heat-resistive resin tape (4) and a second heat-resistive resin tape (6) are laminated with an adhesive layer (10) interposed therebetween while two or more heating elements (2) extending in the longitudinal direction are interposed between the first heat-resistive resin tape (4) and the second heat-resistive resin tape (6), the two or more heating elements (2) being disposed while being insulated from each other and being respectively and independently joined to different lead wires (8) from the outside, the spiral tube-like heater (1) being **characterized in that**
an adhesive sheet (12) is disposed between the first heat-resistive resin tape (4) and one joint portion (3b) of the joint portions (3) of the two or more heating elements (2) with respect to the lead wires (8) and is disposed between the second heat-resistive resin tape (6) and the other joint portions (3a, 3c) adjacent to the one joint portion (3b), and then the first heat-resistive resin tape (4) and the second heat-resistive resin tape (6) are laminated through the adhesive layer (10).

2. The spiral tube-like heater according to claim 1,
wherein the two or more heating elements (2) are provided so that the relative position of the joint portion (3b) with respect to the lead wire (8) in the longitudinal direction is different from that of at least the adjacent different heating element (2).

## Patentansprüche

1. Spiralrohrartige Heizvorrichtung (1), in der ein erstes wärmebeständiges Kunststoffband (4) und ein zweites wärmebeständiges Kunststoffband (6) mit einer dazwischen befindlichen Klebeschicht (10) laminiert sind, wobei zwei oder mehr Heizelemente (2), die sich in der Längsrichtung erstrecken, zwischen dem ersten wärmebeständigen Kunststoffband (4) und dem zweiten wärmebeständigen Kunststoffband (6) angeordnet sind und die zwei oder mehr Heizelemente (2) so angeordnet sind, dass sie gegeneinander isoliert sind und jeweils unabhängig mit unterschiedlichen Zuleitungsdrähten (8) von außen verbunden sind, wobei die spiralrohrartige Heizvorrichtung (1) **dadurch gekennzeichnet ist, dass**
eine Klebefolie (12) zwischen dem ersten wärmebeständigen Kunststoffband (4) und einem Verbindungsabschnitt (3b) der Verbindungsabschnitte (3) der zwei oder mehr Heizelemente (2) in Bezug auf die Zuleitungsdrähte (8) angeordnet ist und zwischen dem zweiten wärmebeständigen Kunststoffband (6) und den anderen Verbindungsabschnitten (3a, 3c) an den einen Verbindungsabschnitt (3b) angrenzend angeordnet wird und dann das erste wärmebeständige Kunststoffband (4) und das zweite wärmebeständige Kunststoffband (6) über die Klebeschicht (10) laminiert werden.

2. Spiralrohrartige Heizvorrichtung nach Anspruch 1,
wobei die zwei oder mehr Heizelemente (2) so angeordnet sind, dass die relative Position des Verbindungsabschnitts (3b) in Bezug auf den Zuleitungsdraht (8) in der Längsrichtung sich von der wenigstens des angrenzenden anderen Heizelementes (2) unterscheidet.

## Revendications

1. Élément chauffant tubulaire en spirale (1) dans lequel une première bande de résine résistive avec la chaleur (4) et une seconde bande de résine résistive avec la chaleur (6) sont stratifiées avec une couche adhésive (10) intercalée entre celles-ci alors que deux ou plusieurs éléments chauffants (2) s'étendant dans la direction longitudinale sont intercalés entre la première bande de résine résistive avec la chaleur (4) et la seconde bande de résine résistive avec la chaleur (6), les deux ou plusieurs éléments chauffants (2) étant disposés tout en étant isolés l'un de l'autre et réunis respectivement et indépendamment à différents fils de sortie (8) depuis l'extérieur, l'élément chauffant tubulaire en spirale (1) étant **caractérisé en ce que**
une feuille adhésive (12) est disposée entre la première bande de résine résistive avec la chaleur (4) et une partie formant joint (3b) parmi les parties formant joint (3) des deux ou plusieurs éléments chauffants (2) par rapport au fil de sortie (8), et elle est disposée entre la seconde bande de résine résistive avec la chaleur (6) et les autres parties formant joint (3a, 3c) adjacentes à la première partie formant joint (3b), puis la première bande de résine résistive avec la chaleur (4) et la seconde bande de résine résistive avec la chaleur (6) sont stratifiées de part et d'autre de la couche adhésive (10).

2. Élément chauffant tubulaire en spirale selon la revendication 1,
dans lequel les deux ou plusieurs éléments chauffants (2) sont prévus de telle sorte que la position relative de la partie formant joint (3b) par rapport au fil de sortie (8) dans la direction longitudinale soit différente de celle d'au moins l'élément chauffant différent adjacent (2).
